# EUROPÄISCHE PATENTANMELDUNG

(11) **EP 4 245 445 A2**
(43) Veröffentlichungstag der Anmeldung: **20.09.2023**
(21) Anmeldenummer: 23161562.6
(22) Anmeldetag: 13.03.2023
(51) Int. Cl.: B23B 47/28, H02G 1/00

(54) **BOHRSCHABLONE FÜR HOHLWANDDOSEN**

(30) Priorität: 15.03.2022 DE 102022105990
(71) Anmelder: Wolfcraft GmbH, 56746 Kempenich (DE)
(72) Erfinder: Ebert, Winfried, 56745 Weibern (DE)
(74) Vertreter: Grundmann, Dirk

(57) **Zusammenfassung**

Eine Bohrschablone für Hohlwanddosen, mit einem eine auf eine Hohlwand auflegbare Auflageseite (2) ausbildenden Schablonenkörper (1), wobei aus der Auflageseite (2) ein Zentrierdorn (3) zum Einstecken in eine in die Hohlwand eingebrachte erste Bohrung abragt, und mit mindestens einer orthogonal zur Auflageseite (2) in letztere mündende, vom Zentrierdorn (3) mit einem Standardabstand beabstandete Bohrhülse (4, 5, 6) zur Führung eines Bohrers zum Fertigen einer zur ersten Bohrung parallelen zweiten Bohrung. Zur gebrauchsvorteilhaften Verbesserung wird vorgeschlagen, dass der Zentrierdorn (3) von der aus der Auflageseite (2) abragenden Arbeitsstellung in eine nicht über die Auflageseite (2) ragende Stellung verlagerbar ist. Dort kann der Zentrierdorn (3) mithilfe eines Blockierelementes (7) gehalten werden.

## Beschreibung

### Gebiet der Technik

Die Erfindung betrifft eine Bohrschablone für Hohlwanddosen mit einem eine auf eine Hohlwand auflegbare Auflageseite ausbildenden Schablonenkörper, wobei aus der Auflageseite ein Zentrierdorn zum Einstecken in eine bereits in die Hohlwand eingebrachte Bohrung abragt. Es sind ein oder mehrere orthogonal zur Auflageseite sich erstreckende Öffnungen vorgesehen. Diese bilden Bohrführungen, die vom Zentrierdorn mit einem Standardabstand, beispielsweise 71 mm oder 91 mm beabstandet sind.

### Stand der Technik

Eine Bohrschablone der gattungsgemäßen Art wird in der DE 40 01174 A1 beschrieben. Bohrschablonen sind ferner bekannt aus den DE 100 27 621 A1, DE 20 2005 000 577 U1, DE 199 34 615 A1, DE 20 2006 007383 U1, EP 3 621 167 B1, DE 20 2013 006 650 U1, DE 20 2016 101 561 U1, DE 10 2008 062 348 A1, DE 102 19 936 A1, DE 20 2012 002 111 U1, EP 3 527 311 A1, DE 43 39 351 A1und DE 20 2019 104 816 U1.

Eine Bohrschablone mit einem länglichen Griff ist bekannt aus der DE 10 2017 124 413 A1.

Die DE 10 2018 109159 A1 beschreibt eine Bohrschablone mit einem Zentrierdorn, der von einer Verwahrstellung in eine Arbeitsstellung verlagerbar ist.

### Zusammenfassung der Erfindung

Der Erfindung liegt die Aufgabe zugrunde, eine gattungsgemäße Bohrschablone gebrauchsvorteilhaft weiterzubilden.

Gelöst wird die Aufgabe durch die in den Ansprüchen angegebene Erfindung, wobei die Unteransprüche nicht nur vorteilhafte Weiterbildungen der im Anspruch 1 angegebenen Bohrschablone, sondern auch eigenständige Lösungen der Aufgabe darstellen.

Zunächst und im Wesentlichen wird vorgeschlagen, dass der Zentrierdorn, der in seiner Arbeitsstellung aus der Auflageseite hervorragt, gegen die Rückstellkraft eines Federelementes in eine zweite Stellung gebracht werden kann, in der der Zentrierdorn nicht über die Auflageseite ragt. In dieser Position kann die Auflageseite, die sich in einer Planfläche mit ein oder mehreren Höhlungen erstrecken kann, auf eine Hohlwand aufgelegt werden, um eine erste Bohrung zu fertigen. Dies kann mithilfe der mindestens einen bevorzugt als Bohrhülse ausgebildeten Bohrführung erfolgen. Die Bohrführung kann eine zylinderförmige Öffnung sein, die sich durch den Schablonenkörper erstreckt, sodass ein Bohrer in die Bohrführung eingesetzt werden kann. Die Bohrhülse kann eine aus Metall bestehende Wand aufweisen. Der Schablonenkörper kann aus Kunststoff bestehen. In den Kunststoffkörper können Stahlhülsen eingesetzt werden, die die Bohrführungen ausbilden. Gemäß einem Aspekt der Erfindung wird vorgeschlagen, dass der Zentrierdorn von einem Federelement in Richtung seiner Arbeitsstellung beaufschlagt wird. Dieses Federelement wird gespannt, wenn der Zentrierdorn von der Arbeitsstellung in die zurückverlagerte Stellung gebracht wird, in der er nicht über die Auflageseite hinausragt. Gemäß einer bevorzugten Weiterbildung der Erfindung ist vorgesehen, dass es sich bei der zurückverlagerten Stellung um eine Verwahrstellung handelt, in der der Zentrierdorn gefesselt werden kann. Hierzu kann ein Blockierelement vorgesehen sein, das sich von einer ersten Stellung, in der der Zentrierdorn aus der Auflageseite herausragt, in eine zweite Stellung verlagern lässt, in der das Blockierelement ein Verlagern des Zentrierdorns von der Verwahrstellung in die Arbeitsstellung verhindert. Das Blockierelement kann von dem Zentrierdorn ausgebildet sein. Es ist aber auch möglich, dass das Blockierelement vom Gehäuse ausgebildet ist oder dass ein Vorsprung oder eine Nische des Zentrierdorns mit einem Vorsprung oder einer Nische des Gehäuses zusammenwirkt. Es kann beispielsweise vorgesehen sein, dass ein Exzenter vorgesehen ist, der durch Drehen des Zentrierdorns in eine Blockierstellung gebracht wird, in der der Zentrierdorn in der Verwahrstellung gehalten wird. Es kann aber auch ein Schieber vorgesehen sein, der das Blockierelement ausbildet. Der Schieber kann einen von der Auflageseite her zugänglichen Betätigungsabschnitt ausbilden. Dieser Betätigungsabschnitt kann eine Griffmulde aufweisen, in der der Benutzer mit einem Finger eingreifen kann, um das Blockierelement zu verlagern. Das Blockierelement ist bevorzugt ein linear verlagerbarer Schieber. Das Blockierelement kann ein Fenster aufweisen, welches eine längliche Form aufweist und durch welches der Zentrierdorn hindurchragen kann. Der Zentrierdorn bildet dann gewissermaßen eine Führung für den das Blockierelement ausbildenden Schieber. Gemäß einer Variante kann das Blockierglied auch durch eine Relativbewegung des Zentrierdornträgers in eine Wirkstellung gebracht werden, in der der Zentrierdorn in der Verwahrstellung gehalten wird. Beispielsweise kann das Blockierelement ein radial vom Zentrierdornträger abragender Vorsprung sein, der sich in der Arbeitsstellung des Zentrierdorns an einer ersten Schulter abstützt oder der in der Arbeitsstellung in einer Öffnung, beispielsweise Gehäusewand oder einer Platte, liegt. Nach einer Verlagerung des Zentrierdornträgers von der Arbeitsstellung in die Verwahrstellung kann das Blockierelement durch eine Drehung des Zentrierdornträgers in eine Wirkstellung gebracht werden, in der das Blockierglied den Zentrierdorn in der Verwahrstellung hält. Der Vorsprung kann ein den Zentrierdornträger kreuzender Zapfen sein. Der Vorsprung kann aber auch eine radiale Anformung an den Zentrierdornträger sein. Bevorzugt weist der Zentrierdorn zwei diametral gegenüberliegende Blockierelemente auf. Er kann sich auch an einer zweiten Schulter abstützen. Der Zentrierdorn kann von einem Zentrierdornträger ausgebildet sein. Er kann ein kreisrunder Schaft des Zentrierdornträgers sein. Der Zentrierdornträger kann einen Kopf aufweisen, der einen Rand aufweist, der auf einem Rand des länglichen Fensters des Blockierelementes aufliegt. Der Kopf kann zudem von dem Federelement beaufschlagt werden. Bei dem Federelement kann es sich um eine Wendelgangdruckfeder handeln. Das Blockierelement kann eine Raststufe aufweisen, die an das Fenster angrenzt und die in der Verwahrstellung den Rand des Kopfes unterstützt. In einer Weiterbildung der Erfindung weist der Schablonenkörper eine Libelle auf. Die Libelle ist von einer Sichtseite des Schablonenkörpers sichtbar, wobei die Sichtseite der Auflageseite gegenüberliegt. Ein Libellenträger, der die Libelle trägt, kann um eine Drehachse, die orthogonal zur Auflageseite verläuft, gedreht werden, sodass die Libelle von einer sich parallel zu einem Längsrand erstreckenden Drehstellung in eine parallel zu einem Schmalrand sich erstreckenden Drehstellung bringbar ist. Es sind bevorzugt Rastmittel vorgesehen, mit denen der Libellenträger in vorgegebenen Rastpositionen gehalten ist. Die zuvor genannten Drehstellungen können zu Rastpositionen gehören. Es können weitere Rastpositionen zwischen den zuvor genannten Drehstellungen vorgesehen sein. Der Libellenträger kann eine topfartige Form besitzen. Er kann einen Topfboden besitzen, der eine längliche Öffnung aufweisen kann, durch die die Libelle sichtbar ist. Enden der Libelle können sich an Rändern der länglichen Öffnung im Boden abstützen. Der Libellenträger kann einen sich auf einer Kreisbogenlinie erstreckenden Rand aufweisen. Dieser Rand kann einen Rand einer Öffnung des Schablonenkörpers untergreifen. Der Libellenträgers kann mittels des Federelementes in eine Richtung weg von der Auflageseite beaufschlagt werden. Hierzu kann das Federelement an der Libelle angreifen, sodass die Libelle in Richtung des Bodens des Libellenträgers beaufschlagt wird. Der Rand des Libellenträgers wird dabei gegen den Rand der Öffnung beaufschlagt. Zwischen Rand des Libellenträgers und Rand der Öffnung können die vorgenannten Rastmittel bildende Rastelemente vorgesehen sein, die ineinandergreifen, um den Libellenträger in seinen Raststellungen zu fixieren. Beim Drehen des Libellenträgers werden diese Rastelemente außer Eingriff gebracht, was mit einer axialen Verlagerung des Libellenträgers gegenüber dem Schablonenkörper einhergeht. Die Gehäusehöhlung des Schablonenkörpers, in der das Blockierelement, der Kopf des Zentrierdornträgers und das Federelement angeordnet sind, kann mit einer Platte verschlossen sein, die sich parallel zur Auflageseite erstreckt und die mit von der Auflageseite her zugänglichen Befestigungsmitteln, beispielsweise Schrauben, am Schablonenkörper befestigt ist. Die Platte kann eine Öffnung aufweisen, durch die der von einem Schaft des Zentrierdornträgers ausgebildete Zentrierdorn hindurchtreten kann. Die Öffnung kann einen kreisrunden Querschnitt aufweisen, der dem Querschnitt des Zentrierdornes entspricht. In einer Weiterbildung der Erfindung wird vorgeschlagen, dass der Sichtseite des Schablonenkörpers ein Griff entspringt. Der Griff kann eine längliche Erstreckung aufweisen und von einem in einer Ebene sich erstreckenden Abschnitt der Sichtseite benachbart sein. Der ebene Abschnitt der Sichtseite erstreckt sich zwischen den Rändern des Schablonenkörpers und dem Griff. Im Griff befinden sich bevorzugt die Bohrhülsen. In einer Weiterbildung wird vorgeschlagen, dass der Schablonenkörper ein länglicher Körper ist mit zwei parallel zueinander verlaufenden Längsrändern und zwei rechtwinklig zu den Längsrändern verlaufenden Schmalrändern. Sowohl die Schmalränder als auch die Längsränder können Markierungen aufweisen. Die beiden Längsränder können an den Stellen Markierungen, insbesondere Kerben aufweisen, an denen sich der Zentrierdorn beziehungsweise die Bohrhülsen befinden. Die Markierungen können somit einen Standardabstand von 71 mm beziehungsweise 91 mm aufweisen. Die Schmalseiten können Markierungen in ihren Mitten aufweisen. Es ist insbesondere vorgesehen, dass zwei Bohrhülsen in einem Abstand von 71 mm zueinander angeordnet sind. Eine der beiden Bohrhülsen kann einen Abstand von 71 mm zum Zentrierdorn haben. Eine weitere Bohrhülse kann einen Abstand von 91 mm zum Zentrierdorn aufweisen. An den Längsrändern können sich darüber hinaus Skalen erstrecken. Es handelt sich bevorzugt um Millimeterskalen. Die Ränder können Schrägflächen aufweisen, auf denen die Skalen angeordnet sind. Die Länge der Schmalseite kann einem Standardmaß entsprechen, welches bevorzugt 71 mm ist.

### Kurze Beschreibung der Zeichnungen

Im Folgenden wird die Erfindung anhand von Ausführungsbeispielen näher erläutert. Es zeigen:
- Fig. 1: in einer perspektivischen Darstellung eine Bohrschablone,
- Fig. 2: eine Seitenansicht der Bohrschablone,
- Fig. 3: eine Draufsicht auf die Bohrschablone,
- Fig. 4: eine Unteransicht der Bohrschablone,
- Fig. 5: den Schnitt gemäß der Linie V-V, wobei ein Zentrierdorn 3 eine Arbeitsstellung einnimmt,
- Fig. 6: eine Schnittdarstellung gemäß Figur 5, jedoch vergrößert und mit einem sich in einer Verwahrstellung befindlichen Zentrierdorn 3,

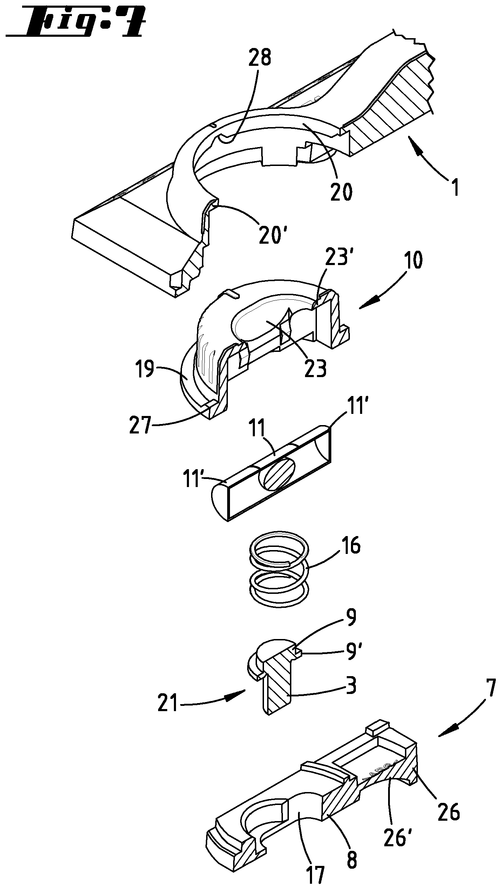

- Fig. 7: eine erste perspektivische, geschnittene Darstellung der wesentlichen Elemente der Bohrschablone,

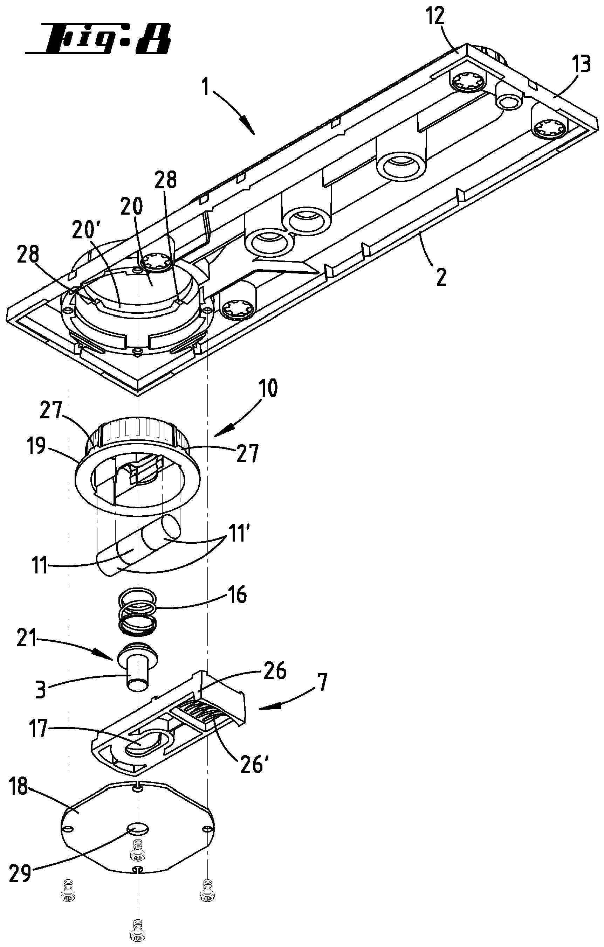

- Fig. 8: eine zweite, allerdings ungeschnittene perspektivische Darstellung,
- Fig. 9: eine Darstellung gemäß Figur 5 eines zweiten Ausführungsbeispiels,
- Fig. 10: vergrößert den Ausschnitt X in Figur 9,
- Fig. 11: eine Unteransicht auf das zweite Ausführungsbeispiel,
- Fig. 12: eine Darstellung gemäß Figur 10, jedoch in einer Verwahrstellung des Zentrierzapfens 3,
- Fig. 13: eine Explosionsdarstellung des zweiten Ausführungsbeispiels,
- Fig. 14: eine Unteransicht eines dritten Ausführungsbeispiels,
- Fig. 15: einen Schnitt ähnlich der Figur 5 des dritten Ausführungsbeispiels,
- Fig. 16: vergrößert den Ausschnitt XVI in Figur 15 in der Arbeitsstellung des Zentrierdorns,
- Fig. 17: eine Darstellung gemäß Figur 16, jedoch in der Arbeitsstellung des Zentrierdorns,
- Fig. 18: eine perspektivische, teilweise aufgeschnittene Darstellung des dritten Ausführungsbeispiels in der Arbeitsstellung des Zentrierdorn 3 und
- Fig. 19: eine Darstellung gemäß Figur 18 in der Verwahrstellung.

### Beschreibung der Ausführungsformen

Die in den Figuren dargestellte Bohrschablone dient der Fertigung von Zentrieröffnungen oder dem Markieren von zu fertigenden Zentrieröffnungen. Die Zentrieröffnungen können später verwendet werden, um mit einem Kernbohrer Öffnungen mit einem großen Durchmesser zu fertigen, in die Hohlwanddosen eingesetzt werden können. In die Hohlwanddosen können elektrische Einsätze, wie Schalter oder Steckdosen, eingesetzt werden. Die elektrischen Einsätze und die Hohlwanddosen können dann mit Abdeckrahmen abgedeckt werden.

Die Bohrschablone besitzt einen länglichen Schablonenkörper 1, der aus Kunststoff gefertigt ist und der einen rechteckigen Grundriss aufweist. Eine Unterseite des Schablonenkörpers 1 bildet eine Auflageseite 2, mit der der Schablonenkörper 1 auf eine Trockenbauwand oder dergleichen aufgesetzt werden kann, in die eine Hohlwanddose eingebracht werden soll.

Der Auflageseite 2 liegt eine Sichtseite 22 gegenüber. Die Sichtseite 22 wird umrahmt von schräg verlaufenden schmalen Rändern, auf denen jeweils eine Skala 14 aufgebracht ist. An die schräg verlaufenden Ränder grenzt ein sich in einer Ebene erstreckender Abschnitt 22' der Sichtseite 22 an. Etwa mittig zwischen zwei parallel zueinander verlaufenden Längsrändern 12 erstreckt sich ein schmaler, sich im Wesentlichen über die gesamte Länge des Schablonenkörpers 1 erstreckender Griff 15. Der Griff 15 besitzt einen geringfügigen Abstand zu einem ersten Schmalrand 13. Der Griff 15 grenzt zudem an einen Libellenträger 10 an, in dem sich eine Libelle 11 befindet. Der Libellenträger 10 grenzt unmittelbar an den zweiten Schmalrand 13 an.

Sowohl in den beiden Längsrändern 12 als auch in den Schmalrändern 13 sind von Kerben ausgebildete Markierungen 24 vorgesehen. Eine erste Markierung liegt auf Höhe der Libelle 11 beziehungsweise eines aus der Auflageseite 2 abragenden Zentrierdorns 3. Drei weitere Markierungen 24 liegen auf Höhe von Bohrhülsen 4, 5, 6, die sich auf einer Mittellinie im Bereich des Griffs 15 erstrecken und die von Stahlhülsen gebildet sind. Die Bohrhülsen 4, 5, 6 bilden Bohrführungen aus, die senkrecht zur Auflageseite 2 verlaufen. In die Bohrführungen können ein Bohrer oder ein Bleistift eingesteckt werden, um dort entweder eine Zentrieröffnung zu bohren oder die Position einer Zentrieröffnung zu markieren.

Der Zentrierdorn 3 steckt in einer Öffnung 29 einer Platte 18, die in der vom Rand des Schablonenkörpers 1 umrahmten Auflageseite 2 liegt. Die Platte 18 ist mit Schrauben an der Unterseite des Schablonenkörpers 1 befestigt und verschließt eine Gehäusehöhlung 25.

Die Gehäusehöhlung 25 besitzt einen Boden, der eine kreisrunde Öffnung 20 ausbildet, die zur Sichtseite 22 hin offen ist. Die Öffnung 20 besitzt einen Rand 20'.

In der Öffnung 20 ist der Libellenträger 10 drehbar gelagert. Der Libellenträger 10 wird von einem topfförmigen Körper ausgebildet, der an seiner Topföffnung einen Rand 19 aufweist, der den Rand 20' der Öffnung 20 untergreift. Vom Rand 19 ragen Rastvorsprünge 27 ab, die in Rastausnehmungen 28 des Randes 20' eingreifen können, sodass der Libellenträger 10 um definierte Winkel, die 90 Grad betragen können, gedreht werden kann.

Der Libellenträger 10 besitzt einen Topfboden mit einer Öffnung 23 mit Rändern 23'. In dieser Öffnung lagert eine Libelle 11. Die Endabschnitte 11' der Libelle 11 untergreifen dabei die Ränder 23'.

Es ist ein Federelement 16, insbesondere in Form einer Druckfeder vorgesehen, die den Libellenträger 10 in Richtung auf die Öffnung 23 beaufschlagt. Auf ihrer Innenseite bildet die Öffnung 23 einen länglichen Schacht aus, in dem die Libelle 11 undrehbar einliegt. Der Innendurchmesser der Höhlung des Libellenträgers 10, in der die Libelle 11 einliegt, entspricht etwa der axialen Länge der Libelle 11.

Das Federelement 16 beaufschlagt darüber hinaus einen Zentrierdornträger 21, der den Zentrierdorn 3 ausbildet. Der Zentrierdornträger 21 besitzt einen durchmesservergrößerten Kopf 9 mit einem Rand 9'.

Auf der zur Gehäusehöhlung 25 weisenden Seite der Platte 18 ist ein Blockierelement 7 angeordnet. Beim Ausführungsbeispiel ist das Blockierelement 7 ein Schieber, der über die zur Gehäusehöhlung 25 weisenden Breitseitenfläche der Platte 18 geschoben werden kann. Das Blockierelement 7 bildet ein Fenster 17 aus, durch welches der Zentrierdorn 3 hindurchragt. Auf den beiden Rändern des länglichen Fensters 17 kann sich eine zum Zentrierdorn 3 weisende Unterseite des Randes 9' abstützen.

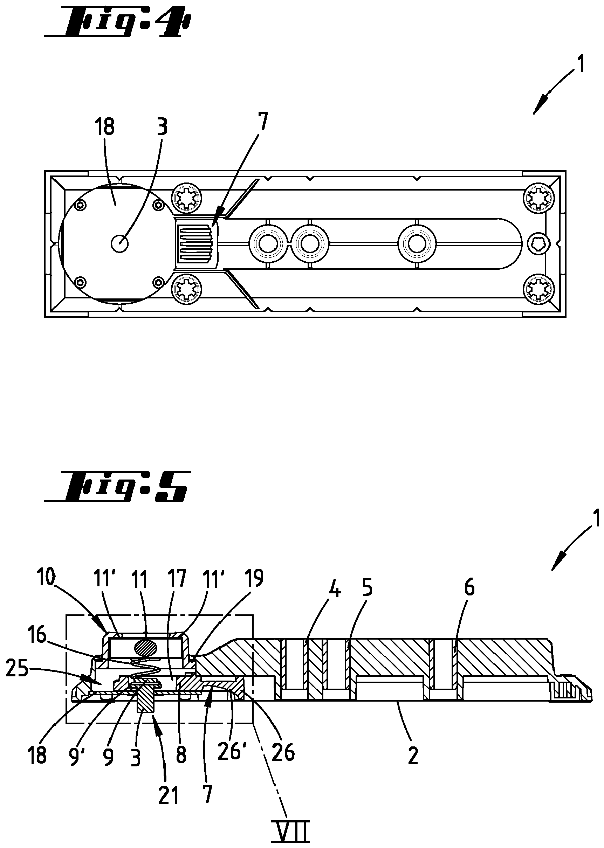

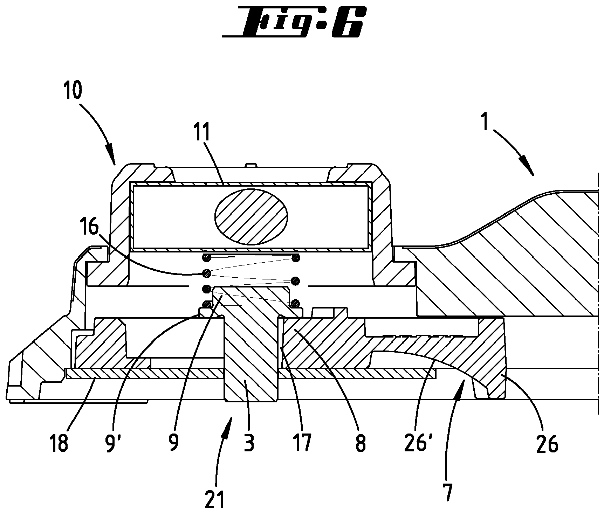

Der Zentrierdorn 3 kann durch Aufbringen einer Kraft von der in der Figur 5 dargestellten Arbeitsstellung, in der der Zentrierdorn 3 über die Auflageseite 2 hinausragt, in eine in der Figur 6 dargestellte Verwahrstellung gebracht werden, in der der Zentrierdorn 3 nicht über die Auflageseite 2 ragt. Der Zentrierdorn 3 kann in der Verwahrstellung mittels des Blockierelementes 7 gefesselt werden.

Das Blockierelement 7 bildet eine Raststufe 8 aus, die sich an ein schmales Ende des Fensters 17 anschließt. Die Raststufe 8 kann den Kopf 9 des Zentrierdornträgers 21 untergreifen. Die zum Zentrierdorn 3 weisende Unterseite des Randes 9' des Kopfes 9 kann sich dann auf der Raststufe 8 abstützen.

Zur Verlagerung des Blockierelementes 7 zwischen Arbeitsstellung und Verwahrstellung ist ein Betätigungsabschnitt 26 vorgesehen, der in eine Ausnehmung der Auflageseite 2 hineinragt. Der Betätigungsabschnitt 26 bildet eine Mulde 26' aus, in die ein Benutzer mit einem Finger hineingreifen kann, um das als Schieber ausgebildete Blockierelement 7 zu verschieben.

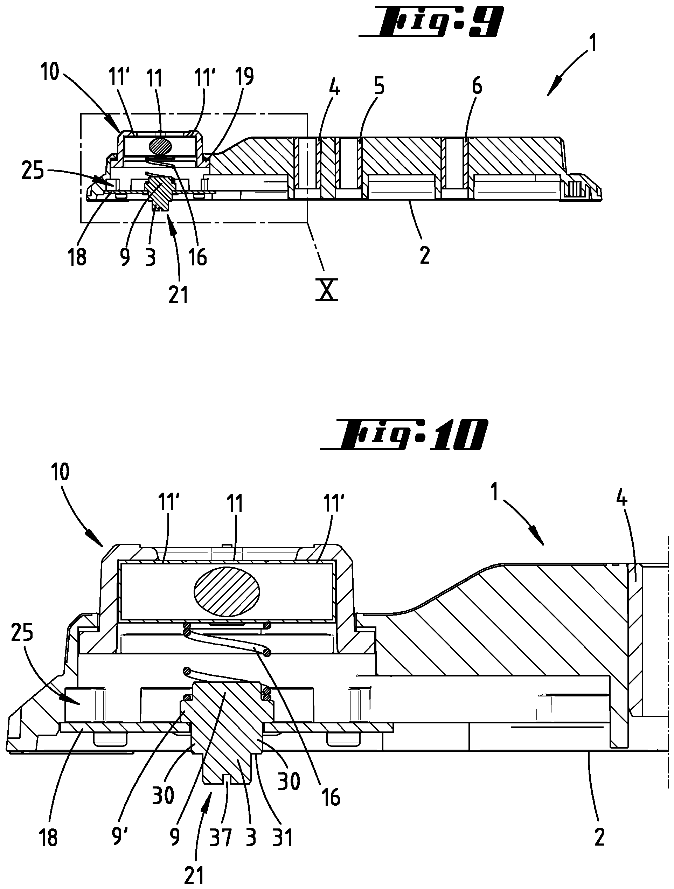

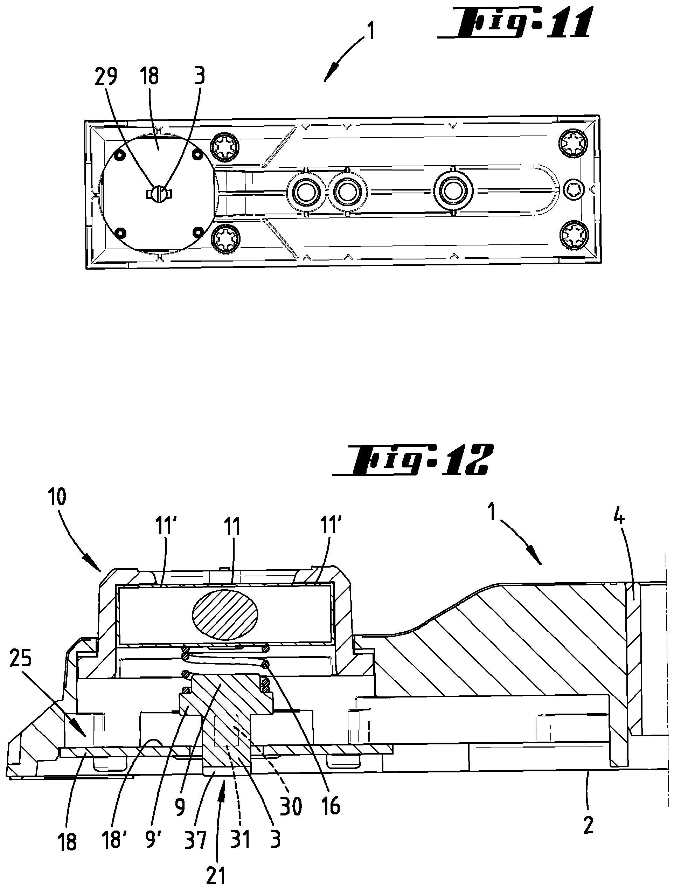

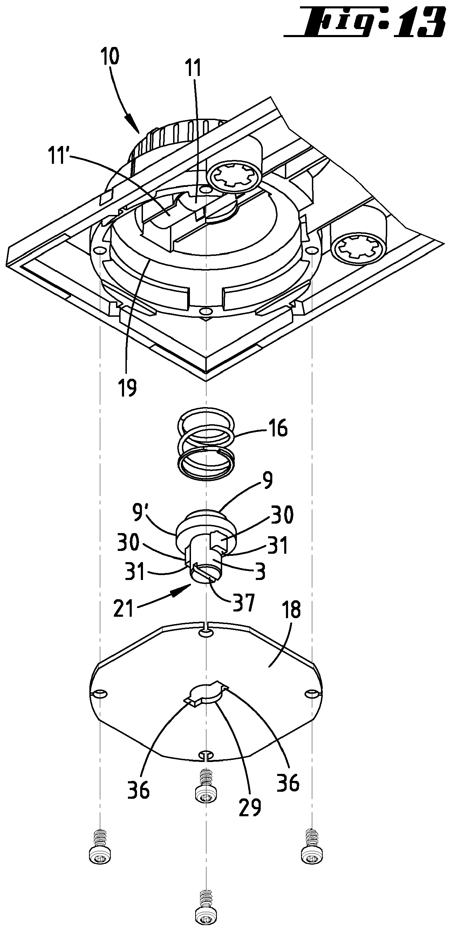

Das in den Figuren 9 bis 13 dargestellte zweite Ausführungsbeispiel unterscheidet sich von dem zuvor erörterten ersten Ausführungsbeispiel im Wesentlichen durch den Rastmechanismus, mit dem der Zentrierdorn 3 in der Verwahrstellung fixiert wird. Während beim ersten Ausführungsbeispiel ein gesondertes Bauteil, nämlich ein Schieber verwendet wird, kann bei dem zweiten Ausführungsbeispiel die Verwahrstellung durch eine Drehung des Zentrierdornträgers 21 erreicht werden. Um den Zentrierdornträger 31 zu drehen, besitzt die Stirnfläche des Zentrierdorns ein Werkzeug-Angriffsprofil, beispielsweise einen Schlitz 37, in dem die Klinge eines Schraubendrehers eingesteckt werden kann. Die Öffnung 29 der Platte 18 besitzt sich gegenüberliegende Ausschnitte 36, in die in der Arbeitsstellung radial vom Zentrierdornträger 21 abragende Vorsprünge 30 hineinragen. Die Vorsprünge 30 bilden Stützflanken 31 aus, mit denen der Zentrierdornträger 21 in der Verwahrstellung gehalten werden kann. Hierzu muss der Zentrierdornträger 21 durch eine axiale Verlagerung in die in der Figur 12 dargestellte Verwahrstellung gebracht werden und anschließend um 90 Grad gedreht werden. Während der Axialverlagerung treten die Vorsprünge 30 aus den Ausschnitten 36 heraus, sodass die Stützflanken 31 über der Rückseite 18' der Platte 18 liegen. In dieser, in den Zeichnungen nicht dargestellten Zwischenstellung kann der Zentrierdornträger 21 um seine Achse gedreht werden, sodass der Vorsprung 30 aus der Fluchtlage zum Ausschnitt 36 gebracht werden kann. Der Zentrierdornträger 21 kann sich dann mit seiner Stützflanke 31 auf der Rückseite 18' der Platte 18 abstützen.

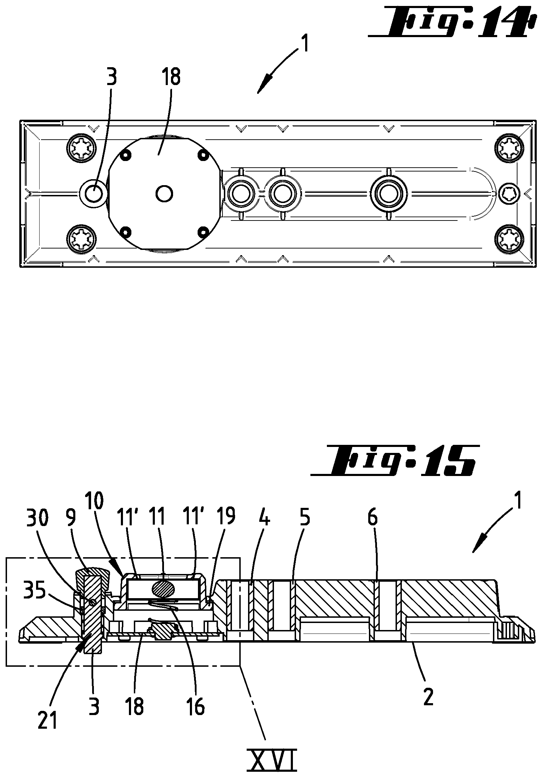

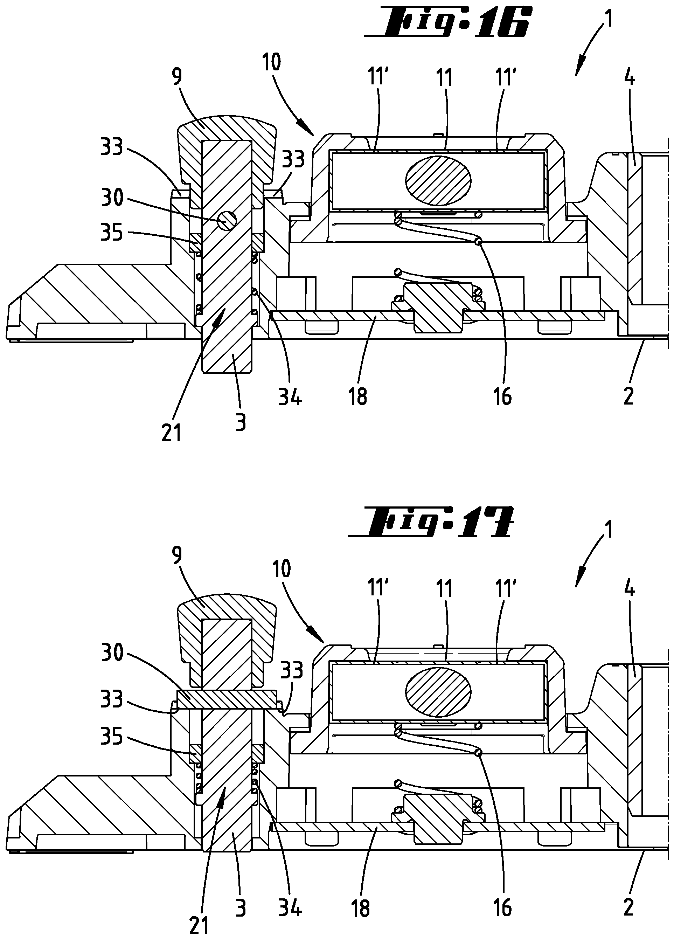

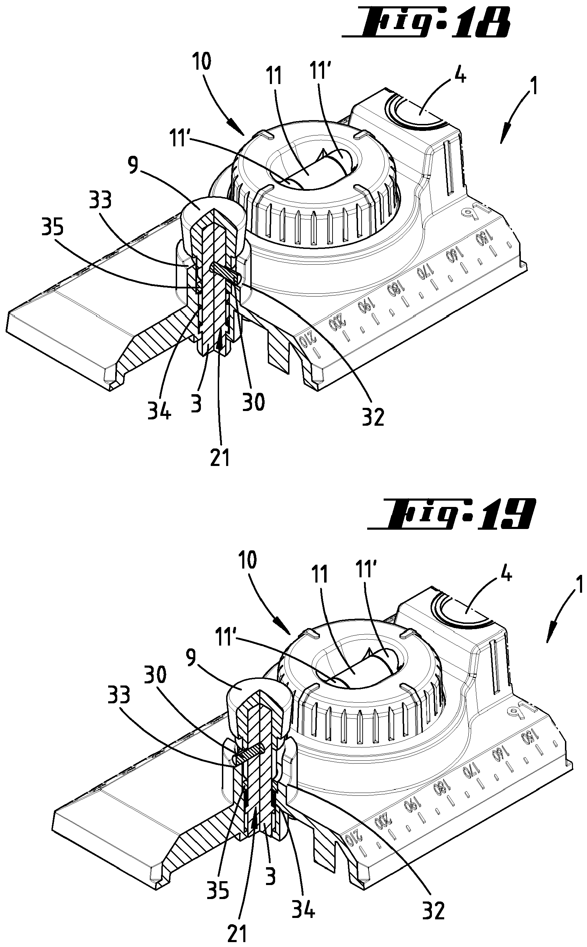

Das in den Figuren 14 bis 19 dargestellte dritte Ausführungsbeispiel unterscheidet sich von den zuvor beschriebenen Ausführungsbeispielen durch net. Die den Libellenträger 10 beaufschlagende Druckfeder 16 kann sich jetzt unmittelbar auf der Platte 18 oder auf einem Stützelement abstützen.

Der Zentrierdornträger 21 wird von einem im Wesentlichen zylindrischen Zapfen ausgebildet, der an einem unteren freien Ende den Zentrierdorn 3 und der an seinem gegenüberliegenden oberen Ende eine Betätigungshandhabe ausbildet, die vom Kopf 9 des Zentrierdornträger 21 gebildet wird. Auch bei diesem Ausführungsbeispiel wird das Blockierelement von einem radial vom Zentrierdornträger 21 abragenden Vorsprung ausgebildet. Der Vorsprung 30 wird von einem in einer Bohrung steckenden Stift ausgebildet, der an zwei sich gegenüberliegenden Seiten über die Mantelfläche des Zentrierdornträgers 21 hinausragt. Ein Federelement 34, das sich an einem Stützring 35 abstützt, beaufschlagt den Zentrierdornträger 21 in die Arbeitsstellung. Der Stützring 35 kann dabei in einem durchmesservergrößerten Abschnitt einer Bohrung stecken, in welcher sich der Zentrierdornträger 21 befindet. Die Wandung dieser Bohrung bildet ein erstes Paar Schultern 32, an dem sich der Vorsprung 30 in der Arbeitsstellung abstützen kann. Durch einen Zug auf die vom Kopf 9 gebildete Handhabe kann der Zentrierdorn 3 in seine Verwahrstellung gebracht werden. Durch eine anschließende Drehung des Zentrierdornträgers 21 kann der Vorsprung 30 auf einer Stufe 33 gesetzt werden, die axial von der Stufe 32 beabstandet ist. Die Stufe 32 kann von einem Boden eines Tiefeneinschnittes in den Rand der Bohrung zur Lagerung des Zentrierdornträgers 21 gebildet sein. Die Stufe 33 kann von einem weniger tief eingeschnittenen Abschnitt des Randes der Bohrung ausgebildet sein. Die Stufen 33 bilden zweite sich gegenüberliegende Schultern aus.

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, wobei zwei, mehrere oder alle dieser Merkmalskombinationen auch kombiniert sein können, nämlich:

Eine Bohrschablone, die dadurch gekennzeichnet ist, dass der Zentrierdorn 3 von der aus der Auflageseite 2 abragenden Arbeitsstellung in eine nicht über die Auflageseite 2 ragende Stellung verlagerbar ist.

Eine Bohrschablone, die dadurch gekennzeichnet ist, dass der Zentrierdorn 3 von einem Blockierelement 7 in seiner nicht über die Auflageseite 2 ragenden Verwahrstellung gehalten werden kann und/oder dass ein den Zentrierdorn 3 in einer Verwahrstellung haltendes Blockierelement 7 von einem Schieber ausgebildet ist, der einen von der Auflageseite 2 zugänglichen Betätigungsabschnitt 26 ausbildet, oder der von einem Vorsprung 30 ausgebildet ist, der sich an einer Schulter 33 oder einer Rückseite 18' einer Gehäusewand 18 abstützt.

Eine Bohrschablone, die dadurch gekennzeichnet ist, dass der Zentrierdorn 3 von einem Federelement 16 in die Arbeitsstellung beaufschlagt ist, welches bei der Verlagerung des Zentrierdorn 3 in die Verwahrstellung gespannt wird und/oder ein den Zentrierdorn 3 beaufschlagendes Federelement 16 eine Wendelgangdruckfeder ist.

Eine Bohrschablone, die dadurch gekennzeichnet ist, dass der Zentrierdorn 3 von einem Zentrierdornträger 21 ausgebildet ist, der einen Kopf 9 mit einem Rand 9' aufweist, der in der Verwahrstellung von einer Raststufe 8 des Blockierelementes untergriffen wird, und auf den das Federelement 16 wirkt oder bei dem der Vorsprung 30 in Radialrichtung von einem Zentrierdornträger 21 abragt und durch eine Drehung des Zentrierdornträgers 21 in eine Wirkstellung bringbar ist, in der der Zentrierdorn in seiner Verwahrstellung gehalten ist.

Eine Bohrschablone, die dadurch gekennzeichnet ist, dass der Schablonenkörper 1 eine in der von der Auflageseite 2 weggerichteten Sichtseite 22 sichtbare Libelle 11 aufweist, wobei die Libelle 11 in einem um eine orthogonal zur Auflageseite 2 verlaufenden Achse drehbaren Libellenträger 10 gelagert ist.

Eine Bohrschablone, die dadurch gekennzeichnet ist, dass der Libellenträger 10 in einer Öffnung 20 des Schablonenkörpers 1 gelagert ist und einen sich auf einer Kreisbogenlinie erstreckenden Rand 19 aufweist, der einen Rand 20' der Öffnung 20 untergreift.

Eine Bohrschablone, die dadurch gekennzeichnet ist, dass der topfförmige Libellenträger 10 von einem Federelement 16 beaufschlagt wird, sodass der Rand 19 des Libellenträgers 10 federkraftbeaufschlagt den Rand 20' der Öffnung 20 untergreift und dort angeordnete Rastmittel, die den Libellenträger 10 in einer Drehstellung gegenüber dem Schablonenkörper 1 fixieren, durch eine Axialverlagerung des Libellenträgers 10 außer Eingriff bringbar sind und/oder dass eine Gehäusehöhlung 25 des Schablonenkörpers 1, die das als Schieber ausgebildete Blockierelement 7, den Kopf 9, das Federelement 16 und den Libellenträger 10 aufnimmt, von einer Platte 18 verschlossen ist, die eine Öffnung aufweist, durch die der Zentrierdorn 3 hindurchragt.

Eine Bohrschablone, die dadurch gekennzeichnet ist, dass die Sichtseite 22 einen sich in einer parallel zur Auflageseite 2 verlaufenden Ebene erstreckenden Abschnitt 22' und einen aus diesem Abschnitt 22' entspringenden Griff 15 ausbildet, der sich parallel und mit Abstand zu Längsrändern 12 des Schablonenkörpers 1 erstreckt und in dem die Bohrhülse 4, 5, 6 angeordnet sind.

Eine Bohrschablone, die dadurch gekennzeichnet ist, dass mehrere, insbesondere zwei Bohrhülsen 4, 6, in einem Abstand von 71 mm zum Zentrierdorn 3 oder voneinander beabstandet sind und/oder dass zumindest eine Bohrhülse 5 in einem Abstand von 91 mm vom Zentrierdorn 3 beabstandet ist und/oder dass zumindest die Längsränder 12 eine Skala 14 aufweisen und/oder dass in den Längsrändern 12 auf Höhe des Zentrierdorns 3 und der Bohrhülsen 4, 5, 6 und/oder an den Mitten der Schmalränder 13 Markierungen 24 angeordnet sind.

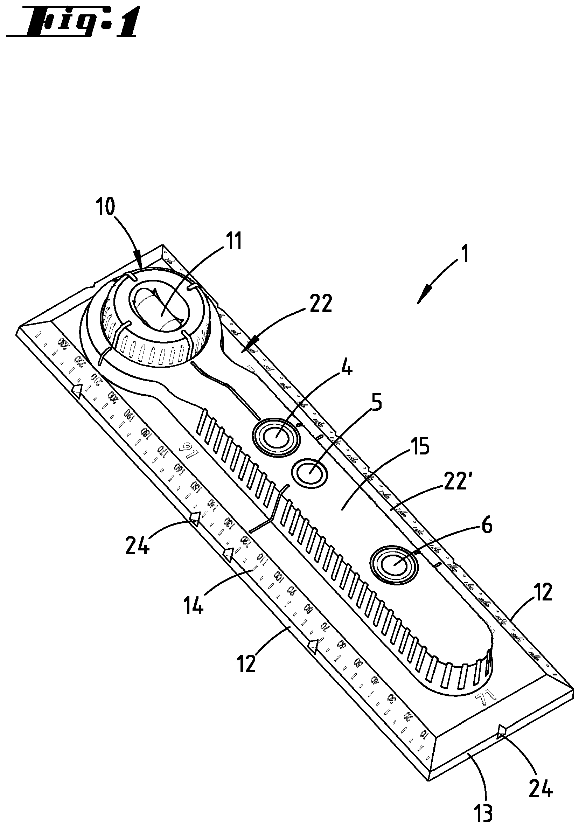

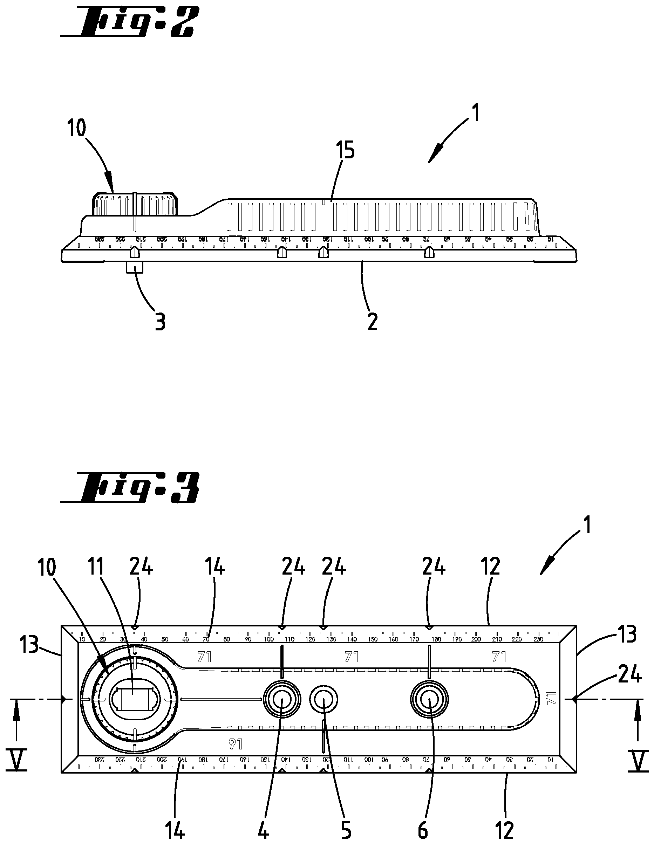

Bei der in den Figuren 1 bis 6 dargestellten Ausführungsform wird das Blockierelement 7 von einem Schieber ausgebildet, der sich in einer linearen Richtung verschieben lässt. Anstelle eines derartigen Schiebers 7 kann aber auch ein Drehschieber vorgesehen sein, dessen Raststufe 8 durch eine Drehung unter den Rand 9' des Kopfes 9 gebracht werden kann. Weiter kann vorgesehen sein, dass das Blockierelement 7 vom Zentrierdornträger 21 selbst ausgebildet wird, beispielsweise derart, dass der Rand 9' des Kopfes exzentrisch ausgebildet ist beziehungsweise einen radial vorstehenden Blockierfortsatz aufweist. Dieser Blockierfortsatz kann durch eine Drehung des Zentrierdorns 3 um seine Achse in eine Stellung gebracht werden, in der er über einer Raststufe 8 liegt, die dann nicht beweglich zu sein braucht, sondern fest am Gehäuse oder an der Platte 18 angeordnet ist. Die Erfindung betrifft somit auch solche Bohrschablonen, bei denen ein am Zentrierdorn befestigtes erstes Rastelement in einer Verwahrstellung des Zentrierdorns 3 mit einem gehäusefesten zweiten Rastelement zusammenwirkt, um den Zentrierdorn 3 in der Verwahrstellung zu fesseln.

Alle offenbarten Merkmale sind (für sich, aber auch in Kombination untereinander) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren, auch ohne die Merkmale eines in Bezug genommenen Anspruchs, mit ihren Merkmalen eigenständige erfinderische Weiterbildungen des Standes der Technik, insbesondere um auf Basis dieser Ansprüche Teilanmeldungen vorzunehmen. Die in jedem Anspruch angegebene Erfindung kann zusätzlich ein oder mehrere der in der vorstehenden Beschreibung, insbesondere mit Bezugsziffern versehene und/oder in der Bezugsziffernliste angegebene Merkmale aufweisen. Die Erfindung betrifft auch Gestaltungsformen, bei denen einzelne der in der vorstehenden Beschreibung genannten Merkmale nicht verwirklicht sind, insbesondere soweit sie erkennbar für den jeweiligen Verwendungszweck entbehrlich sind oder durch andere technisch gleichwirkende Mittel ersetzt werden können.

### Liste der Bezugszeichen

| | | | |
|---|---|---|---|
| 1 | Schablonenkörper | 23 | Öffnung |
| 2 | Auflageseite | 23' | Rand der Öffnung |
| 3 | Zentrierdorn | 24 | Markierung, Kerbe |
| 4 | Bohrhülse, Bohrführung | 25 | Gehäusehöhlung |
| 5 | Bohrhülse, Bohrführung | 26 | Betätigungsabschnitt |
| 6 | Bohrhülse, Bohrführung | 26' | Mulde |
| 7 | Blockierelement | 27 | Rastvorsprung |
| 8 | Raststufe | 28 | Rastausnehmung |
| 9 | Kopf | 29 | Öffnung |
| 9' | Rand des Kopfes | 30 | Vorsprung, Blockierelement |
| 10 | Libellenträger | 31 | Stützflanke |
| 11 | Libelle | 32 | Stufe |
| 11' | Endabschnitt der Libelle | 33 | Stufe |
| 12 | Längsrand | 34 | Federelement |
| 13 | Schmalrand | 35 | Stützring |
| 14 | Skala | 36 | Ausschnitt |
| 15 | Griff | 37 | Werkzeugeingriffprofil |
| 16 | Druckfeder, Federelement | | |
| 17 | Fenster | | |
| 18 | Platte | | |
| 18' | Rückseite | | |
| 19 | Rand | | |
| 20 | Öffnung | | |
| 20' | Rand der Öffnung | | |
| 21 | Zentrierdornträger | | |
| 22 | Sichtseite | | |
| 22' | ebener Abschnitt der Sichtseite | | |

## Patentansprüche

1. Bohrschablone für Hohlwanddosen, mit einem eine auf eine Hohlwand auflegbare Auflageseite (2) ausbildenden Schablonenkörper (1), mit einem Zentrierdorn (3) zum Einstecken in eine in die Hohlwand eingebrachte erste Bohrung, der aus einer aus der Auflageseite (2) abragenden Arbeitsstellung in eine nicht über die Auflageseite (2) ragende Verwahrstellung verlagerbar ist, und mit mindestens einer orthogonal zur Auflageseite (2) in letztere mündende, vom Zentrierdorn (3) mit einem Abstand, oder Standardabstand beabstandete Bohrhülse (4, 5, 6) zur Führung eines Bohrers zum Fertigen einer zur ersten Bohrung parallelen zweiten Bohrung, **dadurch gekennzeichnet, dass** der Zentrierdorn (3) von einem Federelement (16, 34) in die Arbeitsstellung beaufschlagt ist, welches bei der Verlagerung des Zentrierdorn (3) in die Verwahrstellung gespannt wird.

2. Bohrschablone nach Anspruch 1, **dadurch gekennzeichnet, dass** der Zentrierdorn (3) von einem Blockierelement (7, 18', 33) in seiner nicht über die Auflageseite (2) ragenden Verwahrstellung gehalten wird.

3. Bohrschablone nach Anspruch 1, **dadurch gekennzeichnet, dass** ein den Zentrierdorn (3) in der Verwahrstellung haltendes Blockierelement (7) von einem Schieber ausgebildet ist, der einen von der Auflageseite (2) zugänglichen Betätigungsabschnitt (26) ausbildet, oder der von einem Vorsprung (30) ausgebildet ist, der sich an einer Schulter (33) oder einer Rückseite (18') einer Gehäusewand (18) abstützt.

4. Bohrschablone nach einem der vorhergehenden Ansprüche, **dadurch gekennzeichnet, dass** ein den Zentrierdorn (3) beaufschlagendes Federelement (16, 34) eine Wendelgangdruckfeder ist.

5. Bohrschablone nach einem der vorhergehenden Ansprüche, **dadurch gekennzeichnet, dass** der Zentrierdorn (3) von einem Zentrierdornträger (21) ausgebildet ist, der einen Kopf (9) mit einem Rand (9') aufweist, der in der Verwahrstellung von einer Raststufe (8) des Blockierelementes untergriffen wird, und auf den das Federelement (16) wirkt oder bei dem der Vorsprung (30) in Radialrichtung von einem Zentrierdornträger (21) abragt und durch eine Drehung des Zentrierdornträgers (21) in eine Wirkstellung bringbar ist, in der der Zentrierdorn in seiner Verwahrstellung gehalten ist.

6. Bohrschablone nach einem der vorhergehenden Ansprüche, **dadurch gekennzeichnet, dass** der Schablonenkörper (1) eine in der von der Auflageseite (2) weggerichteten Sichtseite (22) sichtbare Libelle (11) aufweist, wobei die Libelle (11) in einem um eine orthogonal zur Auflageseite (2) verlaufenden Achse drehbaren Libellenträger (10) gelagert ist.

7. Bohrschablone nach Anspruch 6, **dadurch gekennzeichnet, dass** der Libellenträger (10) in einer Öffnung (20) des Schablonenkörpers (1) gelagert ist und einen sich auf einer Kreisbogenlinie erstreckenden Rand (19) aufweist, der einen Rand (20') der Öffnung (20) untergreift.

8. Bohrschablone nach Anspruch 7, **dadurch gekennzeichnet, dass** der topfförmige Libellenträger (10) von einem Federelement (16) beaufschlagt wird, sodass der Rand (19) des Libellenträgers (10) federkraftbeaufschlagt den Rand (20') der Öffnung (20) untergreift und dort angeordnete Rastmittel (27, 28), die den Libellenträger (10) in einer Drehstellung gegenüber dem Schablonenkörper (1) fixieren, durch eine Axialverlagerung des Libellenträgers (10) außer Eingriff bringbar sind.

9. Bohrschablone nach einem der Ansprüche 6 bis 8, **dadurch gekennzeichnet, dass** eine Gehäusehöhlung (25) des Schablonenkörpers (1), die das als Schieber ausgebildete Blockierelement (7), den Kopf (9), das Federelement (16) und den Libellenträger (10) aufnimmt, von einer Platte (18) verschlossen ist, die eine Öffnung (29) aufweist, durch die der Zentrierdorn (3) hindurchragt.

10. Bohrschablone nach einem der vorhergehenden Ansprüche, **dadurch gekennzeichnet, dass** die Sichtseite (22) einen sich in einer parallel zur Auflageseite (2) verlaufenden Ebene erstreckenden Abschnitt (22') und einen aus diesem Abschnitt (22') entspringenden Griff (15) ausbildet, der sich parallel und mit Abstand zu Längsrändern (12) des Schablonenkörpers (1) erstreckt und in dem die Bohrhülse (4, 5, 6) angeordnet sind.

11. Bohrschablone nach einem der vorhergehenden Ansprüche, **dadurch gekennzeichnet, dass** mehrere, insbesondere zwei Bohrhülsen (4, 6), in einem Abstand von 71 mm zum Zentrierdorn (3) oder voneinander beabstandet sind.

12. Bohrschablone nach einem der vorhergehenden Ansprüche, **dadurch gekennzeichnet, dass** zumindest eine Bohrhülse (5) in einem Abstand von 91 mm vom Zentrierdorn (3) beabstandet ist

13. Bohrschablone nach einem der vorhergehenden Ansprüche, **dadurch gekennzeichnet, dass** zumindest die Längsränder (12) eine Skala (14) aufweisen.

14. Bohrschablone nach einem der vorhergehenden Ansprüche, **dadurch gekennzeichnet, dass** in den Längsrändern (12) auf Höhe des Zentrierdorns (3) und der Bohrhülsen (4, 5, 6) und/oder an den Mitten der Schmalränder (13) Markierungen (24) angeordnet sind.

15. Bohrschablone, **gekennzeichnet durch** eines oder mehrere der kennzeichnenden Merkmale eines der vorhergehenden Ansprüche.
